# FASCICULE DE BREVET EUROPEEN

(11) **EP 0 410 889 B1**
(45) Date de publication et mention de la délivrance du brevet: **20.10.1993**
(21) Numéro de dépôt: 90402151.6
(22) Date de dépôt: 26.07.1990
(51) Int. Cl.: C10B 53/00, C03C 25/00, C03B 37/10

(54) **Procédé et dispositif pour le traitement de déchets de verre ou de fibres minérales en vue de leur récupération**
Verfahren und Vorrichtung zur Behandlung von Abfallglas oder Mineralfasern für ihre Rückgewinnung
Process and apparatus for treating glass waste or mineral fibres for recovery

(30) Priorité: 26.07.1989 FR 8910043
(43) Date de publication de la demande: 30.01.1991
(73) Titulaire: ISOVER SAINT-GOBAIN, F-92400 Courbevoie (FR)
(72) Inventeur: Deblock, Roger,, B-1080 Bruxelles (BE); M. Bakx, Petrus Johannes Henricus Dionisius, NL-4873 GH Etten-Leur (NL)
(74) Mandataire: Luziau, Nelly

(56) Documents cités:
- DE-A- 3 710 744
- FR-A- 1 244 355
- FR-A- 2 424 237

## Description

La présente invention concerne le traitement de déchets à base de verre ou de fibres minérales, notamment de fibres de verre, associés à une substance organique, en vue de récupérer la matière vitreuse, sans substance organique, et de l'utiliser comme calcin dans des fours de fusion du verre.

Les déchets de cet type de produits contenant des matières organiques posent des problèmes d'élimination, non seulement à cause du volume qu'ils représentent, mais aussi par la pollution qu'ils peuvent provoquer : en effet, certains liants de fibres minérales sont des résines de formaldéhyde, phénol et urée comprenant du formaldéhyde et du phénol libres.

D'autre part, la matière vitreuse contenue dans ces déchets est un produit couteux qu'il est utile de récupérer.

Il est habituel d'utiliser du verre de rebut broyé, appelé calcin, comme matière première introduite dans un four de fusion pour la fabrication de verre. Ce verre de rebut sert, notamment, à aider à la fusion des autres matières premières.

Un problème se pose lorsque l'on souhaite utiliser comme calcin, des déchets de verre traité par une résine synthétique ou des déchets de fibres minérales qui sont utilisées généralement dans des produits d'isolation et qui sont associées à une substance organique leur servant de liant. Ces liants sont généralement des résines phénoplastes (résines formaldéhyde-phénol-urée) ou aminoplastes (résines formaldéhyde-urée-mélamine).

En effet, lorsque ces déchets sont fondus dans un four traditionnel, on obtient un verre réduit présentant certains défauts qui l'empêchent d'être utilisé comme matière première dans la fabrication du verre de bonne qualité (faible transmission énergétique dans les fours, propension à la formation de mousse due à la présence de matières vitreuses réduites et oxydées). Ainsi, la présence des substances organiques liées aux verres ou aux fibres de rebut oblige à introduire dans le four de fusion des quantités importantes d'oxydant tel que le sulfate de sodium, ce qui provoque des dégagements de SO₂ supérieurs aux normes de pollution actuelle, normes qui sont susceptibles de devenir plus contraignantes dans un avenir proche.

Un procédé de traitement des déchets à base de verre est décrit dans la demande de brevet FR 2 424 237. Ce procédé comprend plusieurs étapes thermiques, la température variant d'une étape à l'autre afin d'éliminer progressivement l'eau puis les matières organiques collées aux fibres. Cette élimination est réalisée en présence d'air ou d'oxygène afin d'assurer la combustion desdites matières. Cette combustion n'est pas facile à maîtriser et peut provoquer localement une élévation de la température au-dessus de la température de ramollissement du verre. Il s'ensuit que le matériau traité n'est pas d'une qualité uniforme.

La présente invention a donc pour objet un procédé pour le traitement de déchets à base de verre ou de fibres minérales associés à des substances organiques, procédé qui permet l'élimination de ces substances organiques et la récupération d'une matière vitreuse non réduite, utilisable dans des fours de fusion pour la fabrication du verre.

L'invention a aussi pour objet un dispositif pour la mise en oeuvre de ce procédé.

Le procédé, selon l'invention, pour le traitement de déchets comprenant un substrat formé de verre ou de fibres minérales, associé à des substances organiques consiste à introduire des déchets broyés ou déchiquetés dans un four dit de pyrolyse, à les soumettre à un gaz chaud dont la température est inférieure à la température de ramollissement du substrat des déchets, le gaz étant constitué d'un gaz neutre et de 0 à 10 % d'oxygène en volume, pour pyrolyser les matières organiques et on récupère le substrat des déchets.

Le procédé selon l'invention présente l'avantage que, étant donné la température utilisée, la matière vitreuse constituant le substrat des déchets ne fond pas. On évite ainsi la présence possible de matières organiques dans la matière vitreuse fondue qui, restant piégées après refroidissement de cette matière, confèrent, comme on l'a dit précédemment, au produit récupéré, des caractéristiques le rendant inutilisable comme calcin.

La matière récupérée par le procédé selon l'invention est donc un produit non réduit ou pratiquement pas réduit, qui ne nécessite pas, pour la fabrication ultérieure de verre, d'ajout d'oxydant comme le sulfate de sodium pour compenser la présence d'éléments réducteurs ou bien, si on en ajoute, c'est en quantité faible correspondant à celle habituellement utilisée, dans le four de fusion, pour oxyder les matières organiques contenues dans les autres matières premières.

Un autre avantage du procédé selon l'invention est que la matière vitreuse constituant le substrat des déchets qui est récupérée se trouve sous sa forme initiale. Ainsi, à partir de déchets déchiquetés sous forme de flocons, on récupère des flocons. Des déchets broyés finement en poudre donnent un produit récupéré en poudre.

L'invention concerne aussi un four pour la mise en oeuvre du procédé de traitement par pyrolyse des déchets, tel que décrit précédemment.

Le four de pyrolyse, pour la mise en oeuvre du procédé selon l'invention, pour le traitement de déchets comprenant un substrat formé de verre ou de fibres minérales et associé à des substances organiques est constitué d'une enceinte allongée (1) comprenant, en partie supérieure, une trémie d'entrée (2) pour les déchets à traiter et, en partie basse, une trémie de sortie (3) des déchets traités, un convoyeur (4) muni de perforations, pour le passage de gaz, sensiblement horizontal, qui reçoit les déchets tombant de la trémie d'entrée pour les entrainer jusqu'au droit de la trémie de sortie, un conduit d'entrée (5) de gaz chauffé à une température inférieure à la température de ramollissement du substrat des déchets et comprenant un gaz neutre et de 0 à 10 % en volume d'oxygène pour la pyrolyse des substances organiques, et un conduit de sortie (6) des fumées ayant traversé le lit (7) formé par les déchets et le convoyeur.

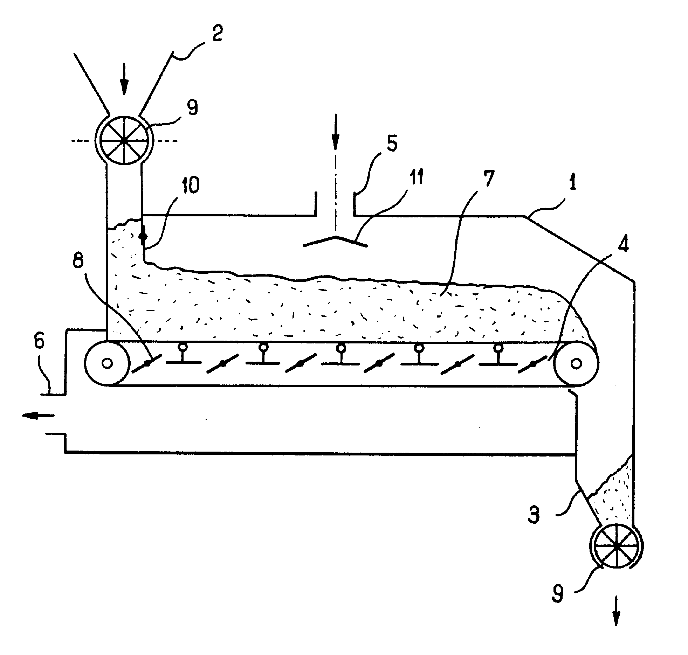

Un tel four est représenté, schématiquement, au dessin annexé qui est donné seulement à titre d'exemple.

Comme représenté au dessin, l'enceinte allongée (1) du four comprend, en partie supérieure, (à gauche sur la figure), la trémie d'entrée (2) pour les déchets à traiter et, en partie basse, (à droite de la figure), la trémie de sortie (3) pour les déchets traités. Le convoyeur (4) sensiblement horizontal est, par exemple en acier inoxydable, et est muni de perforations (non représentées) pour le passage des gaz.

A la partie supérieure du four, on trouve le conduit d'entrée (5) pour le gaz chaud nécessaire à la pyrolyse des substances organiques, ce conduit étant relié à une source de ce gaz (non représentée). A la gauche du four, du point de vue de la figure, se trouve le conduit de sortie (6) des gaz qui ont traversé le lit (7) formé par les déchets déposés sur le convoyeur et le convoyeur (4) lui-même par les perforations dont il est muni. Ce conduit de sortie (6) des gaz peut être éventuellement reliée à un dispositif de recyclage de gaz, non représenté.

Des volets mobiles (8) sont disposés à l'intérieur du convoyeur pour permettre le réglage de la perte de charge du gaz chaud qui traverse le lit (7) de déchets déposés sur le convoyeur en fonction de l'épaisseur du lit, de la densité des déchets et de l'élimination des matières organiques. Ces volets servent aussi à régler la perte de charge, de manière à assurer une distribution choisie du débit de gaz d'un bout à l'autre du convoyeur. On évite ainsi un trajet préférentiel du gaz du conduit d'entrée (5) au conduit de sortie (6) sans traversée de l'autre partie du convoyeur.

Des tambours (9) à alvéoles sont disposés dans les trémies d'entrée (2) et de sortie (3) pour régulariser les débits entrant et sortant des déchets et pour former l'enceinte du four. On peut aussi utiliser tout autre système de sas permettant le contrôle de l'atmosphère.

La trémie d'entrée (2) peut comprendre en outre une plaque (10) de régulation de l'épaisseur du lit de déchets déposé sur le convoyeur.

Un déflecteur (11) est disposé au regard de l'orifice du produit d'entrée (5) du gaz chaud pour assurer une répartition de celui-ci sur toute la longueur du lit de déchets.

Le procédé et le dispositif selon l'invention sont particulièrement utilisables pour le traitement de déchets de fibres minérales, telles que des fibres de verre, associées généralement à des liants aminoplastes ou phénoplastes. La teneur en liant associé à ces fibres peut varier de 5 à 20 % et généralement de 6 à 7 % environ en poids. Ces déchets peuvent provenir de rebut éliminé lors de la fabrication de produits d'isolation ou bien de produits d'isolation usés. Ces déchets peuvent aussi être constitués par des produits fibreux, de structure analogue à ceux utilisés pour l'isolation, mais utilisés pour la culture des plantes. Dans ce cas, les déchets peuvent contenir, en plus des matières organiques formant le liant des fibres, de l'eau et des racines.

Il est préférable, pour la mise en oeuvre du procédé de l'invention, que, lorsque les déchets à traiter sont des fibres, qu'ils soient déchiquetés avant leur introduction dans le four, par exemple sous la forme de flocons.

Les déchets peuvent être aussi broyés pour former des particules de plus petites dimensions, telles que des poudres.

Tout dispositif de déchiquetage est utile pour cela. On peut citer comme dispositifs appropriés, ceux décrits aux brevets français FR-B-2 591 621 et 2 639 868. Le déchiquetage des déchets permet une bonne homogénéisation des produits à traiter, particulièrement lorsque ce sont des mélanges de produits différents, par exemple des mélanges de produits d'isolation et de produits pour la culture, etc...

Lorsque les déchets à traiter sont humides, comme ce peut être le cas des produits fibreux utilisés pour la culture des plantes, il est avantageux de les sécher au moins partiellement afin d'éliminer la vapeur d'eau et éviter ainsi la dilution de ces vapeurs dans les gaz de traitement.

Le gaz et la température de ce dernier, pour le traitement des déchets selon l'invention, sont des facteurs essentiels. En effet, le but de l'invention est d'obtenir la pyrolyse, de préférence pratiquement totale, des matières organiques associées au substrat des déchets sans fondre la matière vitreuse constituant ce substrat, afin d'éviter, comme on l'a dit précédemment, de récupérer une masse fondue pouvant encore contenir des matières organiques indésirables. Pour cela, il est essentiel que la température du gaz, servant à la combustion des matières organiques soit inférieure à la température de ramollissement de la matière constituant le substrat.

De préférence, lorsque les déchets sont des fibres de verre, la température du gaz de traitement est inférieure de 100°C à la température de ramollissement de la matière vitreuse constituant les fibres. En particulier, il est avantageux que cette température soit inférieure à 550°C et, de préférence de l'ordre de 500°C.

La température de traitement est de préférence la plus élevée possible (mais toujours dans les conditions indiquées précédemment), particulièrement lorsque les déchets contiennent une quantité importantes de matières organiques, ceci afin de récupérer le produit avec un rendement souhaité ; cependant, l'utilisation d'une température élevée présente le risque de formation de zones, dans lesquelles la matière vitreuse peut subir au moins un début de fusion, ce que l'on souhaite éviter ; aussi dans ce cas, il est préférable que la durée du traitement soit plus courte.

L'utilisation de températures plus basses est possible, la limite inférieure étant la température de décomposition des matières organiques ; mais cela n'est pas souhaitable ; en effet, cela entrainerait un traitement trop lent et donc, un mauvais rendement.

Le gaz de traitement, utilisé dans l'invention, constitue aussi un facteur important. En effet, il ne doit pas créer de zones de combustion dans lesquelles se produirait une fusion de la matière vitreuse, ce qui serait le cas avec de l'air. On utilise, selon l'invention, un gaz neutre tel que l'azote ; on peut aussi utiliser des gaz ou fumées de combustion et notamment, les fumées provenant du traitement de pyrolyse lui-même, recyclées d'une manière appropriée.

Il a été trouvé préférable pour la réalisation de l'invention que le gaz de traitement contienne en outre de l'oxygène pour favoriser la pyrolyse des matières organiques. La quantité d'oxygène ne doit pas être trop importante pour éviter la formation de foyers de combustion provoquant des augmentations locales de la température entraînant la fusion de la matière vitreuse. Selon l'invention, on peut utiliser jusqu'à 10 % en volume d'oxygène, de préférence jusqu'à 5 % et tout particulièrement entre 1 et 3 %.

Lors du traitement des déchets, ces gaz traversent le lit formé par ces déchets sur le convoyeur (voir figure).

Il s'ensuit que, pour déterminer le débit des gaz, approprié pour le traitement des déchets, on doit tenir compte notamment de l'épaisseur du lit de déchets ainsi que de la densité de compactage des déchets sous la pression des gaz.

Le débit de gaz doit être suffisant pour absorber la perte de charge due à l'épaisseur du lit de déchets à traiter sans pour autant provoquer un compactage exagéré de ces déchets. Des abaques établies d'une manière connue, à partir de mesures de pression ou de vitesse de gaz et de compacité des déchets permettent de choisir des débits pour obtenir ce compromis.

La vitesse de passage du gaz dépend de la durée du traitement.

Pour tenir compte des impératifs liés à l'obtention d'un bon rendement, c'est-à-dire quantité maximale de déchets traités en un temps donné, on peut pyrolyser d'une manière appropriée, une masse de déchets sur une épaisseur de 70 à 80 cm environ avant compactage et présentant une densité sous la pression du gaz de 25 à 50 kg/m³ et de préférence de l'ordre de 30 kg/m³. Une densité inférieure permet d'obtenir de bons résultats, mais le rendement est moins bon. Par contre, le traitement de déchets se présentant sous une densité plus élevée est aussi possible selon le résultat souhaité, c'est-à-dire si une totale pyrolyse des matières organiques n'est pas nécessaire pour l'utilisation ultérieure du produit récupéré.

La durée de traitement de pyrolyse peut varier suivant le résultat souhaité, c'est-à-dire suivant le pourcentage de matières organiques qui doit être éliminé. Elle dépend aussi de l'épaisseur de la masse de déchets à traiter. Dans le cas de déchets de fibres de verre, d'une épaisseur et de densité indiquées précédemment, la durée du traitement pour une pyrolyse pratiquement totale des matières organiques habituellement utilisées est de l'ordre de 30 à 35 min.

En fin de traitement de pyrolyse, on récupère la matière vitreuse qui constituait le substrat des déchets traités et, qui, suivant les conditions de pyrolyse utilisées, peut être exempte de matières organiques. Comme indiqué précédemment, cette matière vitreuse se trouve sous la forme initiale du substrat, par exemple, sous forme de flocons ou de poudre.

Ces produits récupérés, éventuellement après broyage si ce sont des flocons, sont directement utilisables dans des fours de fusion du verre.

Comme indiqué précédemment, les gaz de traitement de pyrolyse, gaz neutre et éventuellement oxygène, sont à une température inférieure à la température de ramollissement du substrat des déchets à traiter, et en particulier à une température inférieure à 550°C. Les gaz récupérés, après pyrolyse des déchets, comprennent des gaz de décomposition des matières organiques. La quantité de chaleur fournie au système est, de préférence, telle que la température des gaz récupérés est au moins égale à 350°C de manière à éviter toute condensation sur les parois des dispositifs de récupération des fumées.

Avantageusement, selon l'invention, les gaz récupérés après pyrolyse, sont recyclés, après passage dans une chambre de combustion pour brûler les gaz résultant de la pyrolyse des matières organiques ; on se sert alors du pouvoir calorifique des matières organiques pour réchauffer les fumées à recycler de 350°C jusqu'à la température nécessaire à la pyrolyse selon l'invention. Cela permet ainsi un fonctionnement autonome du dispositif de pyrolyse.

Suivant un mode de réalisation de l'invention, on introduit dans le four de pyrolyse des flocons secs de fibres minérales provenant d'un produit d'isolation contenant 6 % de liant phénoplaste.

Les flocons forment un lit d'une épaisseur de 70 cm et de densité de 40 kg/m³. Le gaz de traitement à l'entrée du dispositif de pyrolyse comprend 88,7 % d'azote et 1,3 % d'oxygène. La température du gaz d'entrée est de 500°C. La température des gaz de sortie ou évacués est de 350°C. La vitesse de passage du gaz d'entrée est de 0,11 m/s. Après 30 min de traitement, on récupère la matière vitreuse sous forme de flocons, de couleur blanchâtre et présentant une teneur en matières organiques de 0 à 1,2 %, ce qui correspond à une élimination de 85 % de liant.

Le procédé selon l'invention présente de nombreux avantages. Outre ceux indiqués précédemment, c'est-à-dire, récupération de matière vitreuse non réduite, sous sa forme initiale et utile directement comme calcin dans des fours de fusion de verre, l'élimination d'une quantité substantielle, voire de la totalité, de matières organiques, (≧ 85 %) constituées par exemple par le liant de fibres minérales d'isolation, permet d'utiliser le produit récupéré en limitant la quantité d'oxydant habituellement rajouté dans le four.

En outre, le traitement selon l'invention élimine le problème de stockage des déchets de rebut et permet la récupération d'une matière première, la matière vitreuse, qui est chère.

De plus, le recyclage des fumées permet un fonctionnement autonome et évite le rejet de fumée de combustion dans l'atmosphère.

## Revendications

1. Procédé pour le traitement de déchets comprenant un substrat formé de verre ou de fibres minérales, associé à des substances organiques, à une température inférieure à la température de ramollissement du substrat des déchets, caractérisé en ce qu'on introduit les déchets broyés ou déchiquetés dans un four, on les soumet à un gaz chaud, constitué d'un gaz neutre et de 0 à 10 % en volume d'oxygène, pour pyrolyser les substances organiques et on récupère le substrat des déchets.

2. Procédé conforme à la revendication 1, caractérisé en ce que le gaz neutre est de l'azote ou des gaz de combustion.

3. Procédé conforme à l'une des revendications 1 et 2, caractérisé en ce que le gaz contient de 1 à 5 % en volume d'oxygène.

4. Procédé conforme à l'une des revendications 1 à 3, caractérisé en ce que la température du gaz est inférieure de 100°C à la température de ramollissement de la matière vitreuse constituant le substrat.

5. Procédé conforme à la revendication 4, caractérisé en ce que la température est inférieure à 550°C et, de préférence, égale à 500°C.

6. Procédé conforme à l'une des revendications 1 à 5, caractérisé en ce que la masse de déchets à traiter a une épaisseur comprise entre 70 et 80 cm.

7. Procédé conforme à l'une des revendications 1 à 6, caractérisé en ce que la densité de compactage des déchets dans le four est comprise entre 25 et 50 kg/m³.

8. Procédé conforme à l'une des revendications 1 à 7, caractérisé en ce qu'on règle la perte de charge en fonction de l'épaisseur des déchets à traiter et de leur densité.

9. Procédé conforme à l'une des revendications 1 à 7, caractérisé en ce qu'on règle la perte de charge de manière à assurer une distribution choisie du débit de gaz suivant toute la masse à traiter.

10. Procédé conforme à l'une quelconque des revendications 1 à 9, caractérisé en ce qu'on récupère les fumées après traitement à une température supérieure à 350°C.

11. Procédé conforme à l'une quelconque des revendications 1 à 10, caractérisé en ce qu'on recycle les fumées récupérées après traitement.

12. Procédé conforme à l'une quelconque des revendications 1 à 11, caractérisé en ce qu'on traite des déchets contenant des fibres de verre associées à un liant phénoplaste ou aminoplaste.

13. Procédé conforme à la revendication 12, caractérisé en ce qu'on traite des déchets de fibres de verre associées à un liant organique utilisés pour la culture des plantes et on les sèche avant de les introduire dans le four.

14. Four de pyrolyse pour la mise en oeuvre du procédé de traitement de déchets selon l'une des revendications 1 à 13, caractérisé en ce qu'il est constitué d'une enceinte allongée (1) comprenant, en partie supérieure, une trémie d'entrée (2) pour les déchets à traiter et, en partie basse, une trémie de sortie (3) des déchets traités, les deux trémies étant munies dans leur partie inférieure d'un système rotatif de façon à contrôler les débits de délivrance de la matière tout en fermant l'enceinte du four, un convoyeur (4) muni de perforations, sensiblement horizontal, qui reçoit les déchets tombant de la trémie d'entrée pour les entraîner jusqu'au droit de la trémie de sortie, un conduit (5) d'entrée de gaz chauffé à une température inférieure à la température de ramollissement du substrat des déchets et comprenant un gaz neutre et de 0 à 10 % en volume d'oxygène pour la pyrolyse des substances organiques et un conduit (6) de sortie des fumées ayant traversé le lit (7) formé par les déchets et le convoyeur par les perforations.

15. Four conforme à la revendication 14, caractérisé en ce que le système rotatif dans la partie inférieure de chaque trémie est un tambour à alvéoles.

16. Four conforme à l'une des revendications 14 et 15, caractérisé en ce qu'il comprend des volets mobiles disposés à l'intérieur du convoyeur pour régler la distribution de la perte de charge à travers le lit de déchets au long du convoyeur.

17. Four conforme à l'une des revendications 14 à 16, caractérisé en ce que le conduit de sortie des fumées est relié à un dispositif de recyclage des fumées.

## Patentansprüche

1. Verfahren zur Behandlung von Abfällen, die ein aus Glas oder Mineralfasern gebildetes Substrat in Verbindung mit organischen Substanzen enthalten, bei einer Temperatur unterhalb der Erweichungstemperatur des Substrats der Abfälle, dadurch gekennzeichnet, daß man die gemahlenen oder zerstückelten Abfälle in einen Ofen einführt, sie einem heißen Gas unterwirft, das von einem neutralen Gas und 0 bis 10 Vol.-% Sauerstoff gebildet wird, um die organischen Substanzen zu pyrolisieren, und das Substrat der Abfälle gewinnt.

2. Verfahren nach Anspruch 1, dadurch gekennzeichnet, daß das neutrale Gas Stickstoff oder Verbrennungsgas ist.

3. Verfahren nach einem der Ansprüche 1 und 2, dadurch gekennzeichnet, daß das Gas 1 bis 5 Vol.-% Sauerstoff enthält.

4. Verfahren nach einem der Ansprüche 1 bis 3, dadurch gekennzeichnet, daß die Gastemperatur um 100° C unter der Erweichungstemperatur des das Substrat bildenden Glasmaterials liegt.

5. Verfahren nach Anspruch 4, dadurch gekennzeichnet, daß die Temperatur unter 550° C und vorzugsweise bei 500° C liegt.

6. Verfahren nach einem der Ansprüche 1 bis 5, dadurch gekennzeichnet, daß die zu behandelnde Abfallmasse eine Dicke zwischen 70 und 80 cm hat.

7. Verfahren nach einem der Ansprüche 1 bis 6, dadurch gekennzeichnet, daß die Kompaktierungsdichte der Abfälle im Ofen zwischen 25 und 50 kg/m³ liegt.

8. Verfahren nach einem der Ansprüche 1 bis 7, dadurch gekennzeichnet, daß man den Abbrand der Beschickung in Abhängigkeit von der Dicke der zu behandelnden Abfälle und ihrer Dichte einstellt.

9. Verfahren nach einem der Ansprüche 1 bis 7, dadurch gekennzeichnet, daß man den Abbrand der Beschickung auf eine Weise regelt, daß eine gemäß der gesamten zu behandelnden Masse vorgewählte Verteilung der Gasmenge sichergestellt ist.

10. Verfahren nach einem der Ansprüche 1 bis 9, dadurch gekennzeichnet, das man die Rauchgase nach Behandlung bei einer Temperatur von über 350° C zurückgewinnt.

11. Verfahren nach einem der Ansprüche 1 bis 10, dadurch gekennzeichnet, daß man die nach der Behandlung zurückgewonnenen Rauchgase zurückführt.

12. Verfahren nach einem der Ansprüche 1 bis 11, dadurch gekennzeichnet, daß man mit einem Phenoplast- oder Aminoplast-Bindemittel gebundene Glasfasern enthaltende Abfälle behandelt.

13. Verfahren nach Anspruch 12, dadurch gekennzeichnet, daß man Abfälle von Glasfasern, die mit einem organischen Bindemittel gebunden sind, und die für die Pflanzenkultur verwandt werden, behandelt und man diese vor der Einbringung in den Ofen trocknet.

14. Pyrolyseofen für die Durchführung des Verfahrens zur Behandung von Abfällen nach einem der Ansprüche 1 bis 13, dadurch gekennzeichnet, daß er von einer länglichen Kammer (1) gebildet wird, die im oberen Teil einen Einfülltrichter (2) für die zu behandelnden Abfälle und im unteren Teil einen Ausgangstrichter (3) für die behandelten Abfälle aufweist, wobei die beiden Trichter mit ihrem unteren Teil mit einem rotierenden System auf eine Weise verbunden sind, daß die Abgabemengen des Materials kontrolliert ist und zugleich die Ofenkammer geschlossen ist, ein mit Perforationen versehenes Förderband (4), im wesentlichen horizontal, das die vom Ausgangstrichter fallenden Abfälle aufnimmt, um sie bis zum Kegel des Ausgangstrichters mitzunehmen, eine Zuführung (5) für Gas, das auf eine Temperatur unter der Erweichungstemperatur des Abfallsubstrats erhitzt ist und ein neutrales Gas und 0 bis 10 Vol.-% Sauerstoff für die Pyrolyse von organischen Substanzen enthält, und eine Ableitung (6) für die Rauchgase, die das von den Abfällen gebildete Bett (7) und das Förderband durch die Perforationen passiert haben.

15. Ofen nach Anspruch 14, dadurch gekennzeichnet, daß das rotierende System im unteren Teil von jedem Trichter ein Zellenrad ist.

16. Ofen nach einem der Ansprüche 14 und 15, dadurch gekennzeichnet, daß er bewegliche Klappen aufweist, die im Inneren des Förderbandes zur Regelung der Verteilung des Abbrandes der Beschickung über das Abfallbett entlang dem Förderband angeordnet sind.

17. Ofen nach einem der Ansprüche 14 bis 16, dadurch gekennzeichnet, daß die Rauchgasableitung mit einer Vorrichtung zur Rückführung von Rauchgasen verbunden ist.

## Claims

1. Method for the treatment of waste comprising a substrate formed of glass or mineral fibres combined with organic substances, at a temperature which is lower then the melting temperature of the waste substrate, characterised in that ground or shredded waste is introduced into a furnace and subjected to a hot gas, which comprises an inactive gas and 0 to 10 volume % oxygen, in order to pyrolyse the organic substances, and the waste substrate is recovered.

2. Method according to Claim 1, characterised in that the inactive gas is nitrogen or combustion gases.

3. Method according to either of Claims 1 and 2, characterised in that the gas contains between 1 and 5 % by volume of oxygen.

4. Method according to any one of Claims 1 to 3, characterised in that the gas temperature is 100°C lower than the melting temperature of the vitreous material forming the substrate.

5. Method according to Claim 4, characterised in that the temperature is lower than 550°C and is preferably 500°C.

6. Method according to any one of Claims 1 to 5, characterised in that the waste mass to be treated is between 70 and 80 cm thick.

7. Method according to any one of Claims 1 to 6, characterised in that the compacting density of the waste in the furnace is between 25 and 50 kg/m³.

8. Method according to any one of Claims 1 to 7, characterised in that the loss of pressure is adjusted according to the thickness and density of the waste to be treated.

9. Method according to any one of Claims 1 to 7, characterised in that the loss of pressure is adjusted so as to ensure a suitable distribution of the flow rate of gas according to the entire mass to be treated.

10. Method according to any one of Claims 1 to 9, characterised in that the fumes are recovered after treatment at a temperature greater than 350°C.

11. Process according to any one of Claims 1 to 10, characterised in that the fumes recovered after treatment are recycled.

12. Method according to any one of Claims 1 to 11, characterised in that waste containing glass fibres combined with a phenoplast or aminoplast binder is treated.

13. Method according to Claim 12, characterised in that glass fibre waste associated with an organic binder used for plant culture is treated and dried before being introduced into the furnace.

14. Pyrolysis furnace for performing the method of treating waste according to any of Claims 1 to 13, characterised in that it consists of an elongate chamber (1) comprising at the top an inlet hopper (2) for the waste to be treated and at the bottom an outlet hopper (3) for the treated waste, the two hoppers being provided in their lower part with a rotary system in order to control the material delivery flow rates whilst closing the furnace chamber, a substantially horizontal conveyor (4) provided with perforations for receiving the waste falling from the inlet hopper in order to convey it to above the outlet hopper, a passage (5) for the inlet of gas heated to a temperature lower than the melting temperature of the waste substrate and comprising a neutral gas with between 0 and 10 % by volume of oxygen for the pyrolysis of the organic substances, and a passage (6) for the outlet of the fumes which have passed through the bed (7) formed by the waste and the conveyor belt via the perforations.

15. Furnace according to Claim 14, characterised in that the rotary system in the lower part of each hopper is a cellular drum.

16. Furnace according to either of Claims 14 and 15, characterised in that it comprises movable flaps disposed inside the conveyor in order to regulate the distribution of the loss of pressure through the waste bed along the conveyor.

17. Furnace according to any one of Claims 14 to 16, characterised in that the fume outlet passage is connected to a fume recycling device.
